# EUROPEAN PATENT SPECIFICATION

(11) **EP 4 012 317 B1**
(45) Date of publication and mention of the grant of the patent: **28.06.2023**
(21) Application number: 20461591.8
(22) Date of filing: 11.12.2020
(51) Int. Cl.: F28D 7/00

(54) **A WATER CHARGE AIR COOLER**
WASSERLADELUFTKÜHLER
REFROIDISSEUR D'AIR À SURALIMENTATION D'EAU

(43) Date of publication of application: 15.06.2022
(73) Proprietor: Valeo Autosystemy SP. Z.O.O., 32-050 Skawina (PL)
(72) Inventor: JUGOWICZ, Andrzej, 32 050 Skawina (PL); LIPOWSKI, Mateusz, 32 050 Skawina (PL); GUT, Damian, 32 050 Skawina (PL)
(74) Representative: Valeo Systèmes Thermiques

(56) References cited:
- EP-A1- 1 707 911
- EP-A1- 3 388 773
- EP-A1- 3 722 724
- DE-A1-102006 043 526

## Description

### FIELD OF THE INVENTION

The invention relates to heat exchangers, in particular to water charge air coolers. More specifically, the present invention relates to water charge air cooler as defined in the preamble of claim 1, and as disclosed in EP 3 722 724.

### BACKGROUND OF THE INVENTION

A power produced from naturally aspirated engines depends mostly on its efficiency and displacement. At the sea level, naturally aspirated engine is able to inhale only such amount of air, which is delivered by atmospheric force i.e. 1 bar. Moreover, atmospheric pressure decreases with elevation. However, conventional engines can be easily upgraded in order to increase its performance, thermal efficiency and fuel economy.

To overcome the limitations of an atmospheric pressure, air is pressurized (herein referred to as the "charge air") by mechanical or electric compressors, known as superchargers or turbochargers. In the forced induction engines, power output becomes a function of how much air is delivered to the cylinders. Most commonly used methods to put these compressors into action recapture energy from gas exhaust manifold through an expansion turbine, which pressurizes air delivered to the engine, or relay part of engine's power to motorize a supercharger, usually by a set of pulleys. Pressurizing the air leads to substantial increase of its temperature. Consequently, the density of the air decreases with temperature, because hot air is less dense than cold air.

The automotive industry, like many other industrial fields, uses heat exchangers to ensure optimal temperature operating conditions for the engine.

It is therefore known to equip a vehicle with a charge air cooler which is equipped with a set of tubes forming a heat exchange bundle between a first fluid and a second heat transfer fluid, this exchange bundle being housed in a casing.

With respect to cooling medium, charge air coolers can be divided into three types: air-cooled charge air coolers (ACAC), water-cooled charge air coolers (WCAC) and an assemblies that use air conditioning refrigerant for charge air cooling. However, WCAC seems to be favored by automotive manufacturers, due to its efficiency and small packaging.

For several decades now, aluminum has established itself as the constituent metal of heat exchangers and has in fact replaced other metals such as copper, which are used because of their good thermal properties.

Aluminum offers significant weight savings, and aluminum alloys also have good thermal and corrosion resistance.

Due to the complexity of heat exchangers and the small dimensions allowed, the components of a heat exchanger are assembled industrially by brazing, not by spot welding.

The housing of known heat exchangers are usually directly connected to the inlet/outlet for the coolant, without any intermediate distribution means. The housing in which such distribution means, also known as water boxes, are also known.

The water boxes are either formed by stamping/ punching the housing or they are formed as separate sub-components fixed to the housing. Formation of the water box directly from the housing requires expensive and strong tools and there is a risk of damaging the housing during water box formation process.

On the other hand, fixing the water box to the housing requires pre-attaching of the water box to the housing.

Consequently, additional step and tools for cold-forming process are required. Moreover, fixing the water box onto the housing does not ensure proper positioning of the water box with respect to the housing before joining them together in, for example, brazing furnace.

Thus, it is desired to propose an alternative design which would provide inexpensive and simple formation of the WCAC comprising water boxes for coolant distribution.

### SUMMARY OF THE INVENTION

The object of the invention is, among others, a water charge air cooler, comprising a bundle of elongated flat tubes for an air, fixed on both sides in a pair of headers, plate assembly encapsulating together with the headers at least part of the tubes to form a fluid tight channel for a coolant, a coolant inlet and a coolant outlet connected to the plate assembly, wherein the plate assembly comprises a first side wall, the first side wall having an inner surface facing the tubes, a water box for distribution of the coolant with respect to the tubes, the coolant inlet being attached to the water box, wherein the first side wall comprises a first opening for fluidly communicating the water box with the tubes, wherein the water box is attached to the side wall along the outline of the first opening, characterized in that the water box is connected to the inner surface of the first side wall, while it protrudes outwardly from the side wall through the first opening.

Preferably, the first side wall comprises a collar, protruding away from the tubes, so that at least a portion of the inner surface is shifted with respect to the first side wall.

Preferably, the water box comprises a flange comprising a flange inner surface facing the tubes and flange outer surface opposite to the flange inner surface.

Preferably, the flange inner surface is in contact with at least one of the tubes, so that the tubes support the water box.

Preferably, the flange outer surface is in contact with the opening inner surface.

Preferably, the flange is pushed towards the collar.

Preferably, the first opening extends along stacking direction of the tubes.

Preferably, the first side wall comprises a second opening, wherein the first opening is fluidly connected with the coolant inlet and the second opening is fluidly connected with coolant outlet.

Preferably, the plate assembly comprises a second side wall, wherein the second side wall is opposite to the first side wall.

Preferably, the first side wall is fluidly connected to coolant inlet through the first opening and the second side wall is fluidly connected to the coolant outlet thorough the second opening.

Preferably, at least a portion of the water box is sloping towards the tubes along their stacking direction.

Preferably, the water box comprises at least two sections, wherein one section is sloping and the other section is flat.

Preferably, the water box is an essentially L-shaped portion.

Preferably, the water box is of material having the same properties as the plate assembly.

Preferably, the water box is of material having different properties than the plate assembly.

### BRIEF DESCRITPTION OF DRAWINGS

Examples of the invention will be apparent from and described in detail with reference to the accompanying drawings, in which:
Fig. 1 shows a perspective view of a heat exchanger according to the prior art.
Fig. 2 shows a perspective view of the exemplary heat exchanger being the subject-matter of an invention.
Fig. 3 shows a perspective view of the heat exchanger showing a cross-section of a water box in a transverse direction of elongation of the tubes.
Fig. 4 shows a side perspective of the heat exchanger from Figs 2 and 3, showing in detail connection between the water box and a side plate.

### DETAILED DESCRIPTION OF EMBODIMENTS

Embodiments of the invention comprise a water charge air cooler (WCAC) which may be used in automotive industry. The WCAC has evolved to stand out by showing up high efficiency with relatively compact packaging. Apart from the heat exchange unit, which is primarily responsible for heat exchange between the media, WCAC comprises other elements which allow to obtain desired efficiency, such as: sensors, charge air intake/ outtake of a specific shape and smoothness, electric throttle body which regulates the mass flow of air delivered to WCAC, and other.

Although these elements are important for proper operation of the WCAC, they are omitted in the figures and specification for the sake of clarity.

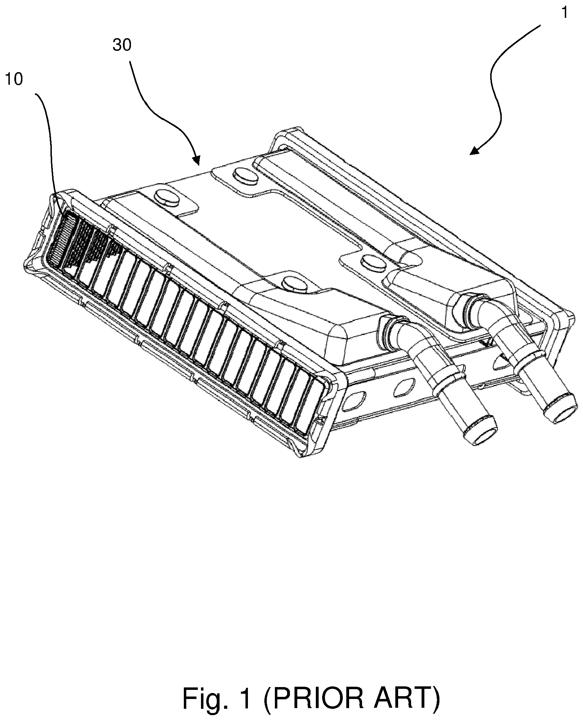

Fig. 1 shows an exemplary water charge air cooler (1) according to state of the art. The water charge air cooler (1) comprises a plate assembly or a housing (30) which encapsulates a bundle of tubes (10). It is noticeable that water boxes are attached to housing (30) by cold-forming process (e.g. by clinching, crimping, stamping, etc.)

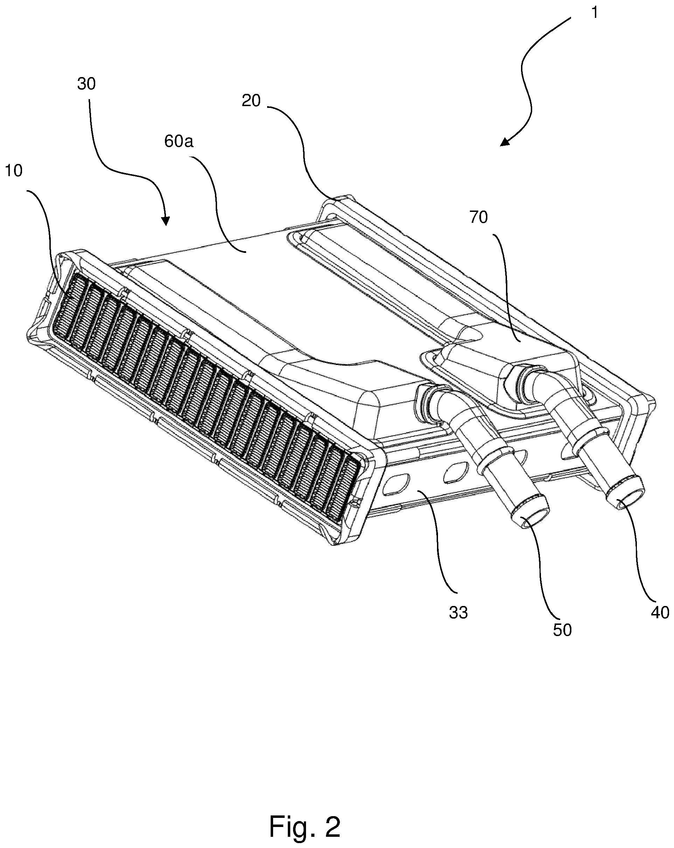

Fig. 2 shows a water charge air cooler (1) being the subject of the invention.

The water charge air cooler (1) may comprise, inter alia, bundle of elongated flat tubes (10). The tubes (10) may be extruded or folded in order to form a channel for an air. Alternatively, the tube (10) may be a plate. It is desired that the air passes through the tubes (10) in specific flow regime, so the tubes (10) may comprise fins or turbulators extending along the inner side of each tube. Fins or turbulators allow to improve the heat exchange process by increasing overall heat exchange area within the water charge air cooler (1).

The water charge air cooler (1) may further comprise at least one header configured to receive the open ends of the tubes. As shown in Fig. 2, the water charge air cooler may comprise a pair of headers (20). The pair of headers (20) may be fixed on both sides of the tubes (10). The number of headers usually depends mainly on the air flow pattern within the heat exchanger (1). An I-flow forces using at least two headers (20) whereas U-flow allows to use one, unitary header which may be configured to receive both open ends of the tubes (10).

The heat exchanger (1) may comprise a plate assembly (30) encapsulating together with the headers (20) at least part of the tubes (10) to form a fluid tight channel for a coolant. The term "encapsulating at least part of the tubes" may be understood as providing a space for coolant which would provide an effective heat exchange between the coolant and hot air flowing through the tubes (10), wherein the tubes (10) may extend beyond the outline of the plate assembly (30). As shown in Fig. 2, such space may be provided by two plates which allow to form a channel for the fluid between the tubes (10), wherein the terminal tubes (10) form the walls for the coolant channel. Hence, the plate assembly (30) may further comprise a first side wall (60a).

The water charge air cooler (1) may further comprise a coolant inlet (40) and a coolant outlet (50) connected to the plate assembly (30). The coolant inlet (40) and the coolant outlet (50) may provide fluidal connection between the water charge air cooler (1) and the coolant loop. As shown in Fig. 2, the coolant inlet (40) and the coolant outlet (50) are identical and they both have similar, circular shape. However, coolant outlets (50) having different shape or cross-section than coolant inlet (40) are also envisaged.

The plate assembly (30) may further comprise at least one terminal plate (33) configured to protect terminal tubes (10) on both sides of the heat exchanger (1) and to facilitate assembling thereof. The heat exchanger (1) shown in Fig. 2 comprises two terminal plates (33) being in contact with both terminal tubes (10).

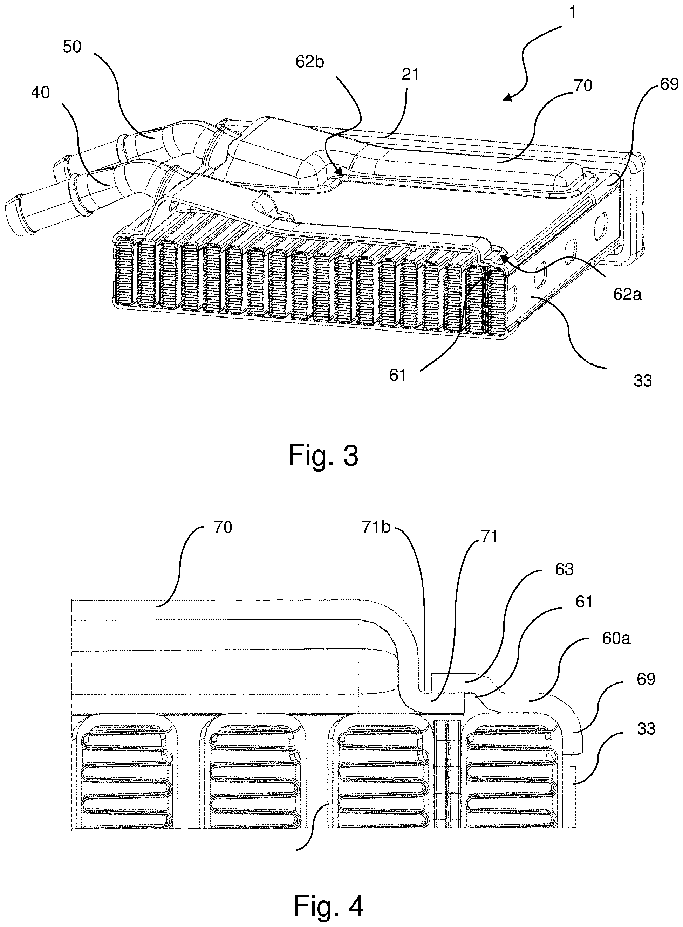

As shown in Figs 3 and 4, the first side wall (60a) may comprise an inner surface (61) facing the tubes (10) and an outer surface being opposite to the inner surface (61). Further, the first side wall (60a) may comprise at least one lip (69) protruding from its edge. The lip (69) may be bent, so that it limits potential outward movement of the terminal tube (10). In other words, the terminal tube (10) may be supported by the lip (60) of the first side wall (60a).

The header (20) may further comprise a collar (21) extending along its perimeter. The collar may be configured to at least partially receive the first side wall (60a) and/or the terminal plates (33) to form a tight assembly.

Fig. 3 shows a perspective close-up view of the water charge air cooler (1) in the vicinity of the first side wall (60a). The water charge air cooler (1) may comprise at least one water box (70) for distribution of the coolant with respect to the tubes (10). The coolant inlet (40) may be attached to the water box (70) by any method which would provide firm and fluid tight connection, for example by crimping, brazing or tight connection.

The first side wall (60a) may further comprise a first opening (62a) for fluidly communicating the water box (70) with the tubes (10). The water box (70) may be attached to the side wall (60a) along the outline of the first opening (62) so that a fluid-tight connection is formed.

It is to be noted that the water box (70) may be connected to the inner surface (61) of the first side wall (60a) while it protrudes outwardly from the side wall (60a) through the first opening (62a). This allows aligning and attaching water box (70) to the plate assembly (30) in a simple way during the production process.

Fig. 4 shows a partial cross-section which refers to connection between the water box (70) and the first side wall (60a).

In order to connect the water box (70) to the inner surface (61) of the first side wall (60a), the first side wall (60a) may comprise a collar (63), protruding away from the tubes (10), so that at least a portion of the inner surface (61) is shifted with respect to the first side wall (60a). The term "shifted" may refer to a portion of at least plate forming the plate assembly (30) which protrudes above the general plane formed by the first side wall (60a). In other words, the collar (63) comprises a portion which is not on the plane formed by the first wall (60a).

The water charge air cooler (1) may further comprise a flange (71) located on the water box (70). The flange (71) may comprise a flange inner surface (71b) facing the tubes (10) and flange outer surface (71a) opposite to the flange inner surface (71b).

In order to provide a tight connection, the flange inner surface (71b) my be in contact with at least one of the tubes (10), so that the tubes (10) support the water box (70). This may be very important especially during the assembly process, wherein the flange (71) may move with respect to the first side wall (60a).

The flange outer surface (71a) may be in contact with the opening inner surface (61) to provide fluid-tight connection. Depending on the desired effect and the assembly process, the outer surface (71a) of the flange (71) and the inner surface (61) of the collar (62) may be aligned differently, for example, the inner surface (61) of the collar (62) may be at an angle with respect to the outer surface (71a) of the flange (71) so that a brazing material may be introduced between the two surfaces (61, 71a) to provide a fluid tight connection between the water box (70) and the plate assembly (30).

Alternatively, after introducing the brazing material between the surfaces (61, 71a), the inner surface (61) of the collar (62) may be bent by the tool before forming a connection between the water box (70) and the plate assembly (30), so that the inner surface (61) of the collar (62) may be arranged parallelly with respect to the outer surface (71a) of the flange (71).

The flange (71) may pushed towards the collar (63) during the assembly process as well as after the assembly process, for example, they may pushed towards the collar (63) by the tubes (10). It is to be noted that term "pushing" may also include the interaction between the elements (63, 71) which does not require existence of the subcomponent which provides such action e.g. tubes (10). For instance, the flange (71) may pushed towards the collar (63) by the force of gravity if the flange (71) is arranged above the collar (63), relatively to ground.

The first opening (62a) may extend along stacking direction of the tubes (10) to provide uniform coolant distribution. More precisely, the first opening (62a) may extend in a way to provide the coolant between the all gaps between the tubes (10). The gaps may be filled by the turbulator fins for coolant.

In order to provide the simplest and cheapest heat exchanger (1), the first side wall (60a) may further comprise a second opening (62b) located on the first side wall (60a), as shown in Figs 2 and 3. The first opening (62a) may be fluidly connected with the coolant inlet (40) and the second opening (62b) may be fluidly connected with coolant outlet (50).

Alternatively, the plate assembly (30) may comprise a second side wall (60b) located on the opposite side to the first side wall (60a). This may allow changing the location of the coolant inlet (40) or the coolant outlet (50) so that the first side wall (60a) is fluidly connected to coolant inlet (40) through the first opening (61a) and the second side wall (60b) is fluidly connected to the coolant outlet (60b) thorough the second opening (61b).

The coolant distribution may further be improved by providing a specific shape of the water box (70). For example, at least a portion of the water box (70) may be sloping towards the tubes (10) along their stacking direction. Further, the water box (70) may comprise at least two sections, wherein one section is sloping and the other section is flat. The sloping portion may have greater volume than the flat portion, yet the size of both sloping and flat portions may be adjusted to desired coolant distribution.

The water box (70) may an essentially L-shaped portion. Such shapes allows moving the coolant inlet (40) closer to coolant outlet (50) so that the requirements of a customer may be met. At the same time, the coolant is distributed as close to the headers as possible, so the heat exchange surface is not reduced.

Preferably, the water box (70) may be made of material having the same properties as the plate assembly (30). In other words, the water box (70) and the plate assembly may be made of the same metal alloy.

Alternatively, the water box (70) may be made of material having different properties than the plate assembly (30). This may further allow, for example, to reduce the cost of the heat exchanger (1).

Preferably, the water box (70) may be made of a material having the same thickness as the plate assembly (30).

Alternatively, the water box (70) may be made of the material having different thickness than the plate assembly (30).

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A water charge air cooler (1), comprising
- a bundle of elongated flat tubes (10) for an air, fixed on both sides in a pair of headers (20),
- plate assembly (30) encapsulating together with the headers (20) at least part of the tubes (10) to form a fluid tight channel for a coolant
- a coolant inlet (40) and a coolant outlet (50) connected to the plate assembly (30), wherein the plate assembly (30) comprises a first side wall (60a), the first side wall (60a) having an inner surface (61) facing the tubes (10),
- a water box (70) for distribution of the coolant with respect to the tubes (10), the coolant inlet (40) being attached to the water box (70),
- wherein the first side wall (60a) comprises a first opening (62a) for fluidly communicating the water box (70) with the tubes (10), wherein the water box (70) is attached to the side wall (60a) along the outline of the first opening (62),
**characterized in that**
the water box (70) is connected to the inner surface (61) of the first side wall (60a), while it protrudes outwardly from the side wall (60a) through the first opening (62).

2. The water charge air cooler (1) according to claim 1, wherein the first side wall (60a) comprises a collar (63), protruding away from the tubes (10), so that at least a portion of the inner surface (61) is shifted with respect to the first side wall (60a).

3. The water charge air cooler (1) according to any of the preceding claims, wherein the water box (70) comprises a flange (71) comprising a flange inner surface (71b) facing the tubes (10) and flange outer surface (71a) opposite to the flange inner surface (71b).

4. The water charge air cooler (1) according to claim 3, wherein the flange inner surface (71b) is in contact with at least one of the tubes (10), so that the tubes (10) support the water box (70).

5. The water charge air cooler (1) according to claims 3 or 4, wherein the flange outer surface (71a) is in contact with the opening inner surface (61).

6. The water charge air cooler (1) according to claim 5, wherein that the flange (71) is pushed towards the collar (63).

7. The water charge air cooler (1) according to any of the preceding claims, wherein the first opening (62a) extends along stacking direction of the tubes (10).

8. The water charge air cooler (1) according to any of the preceding claims, wherein the first side wall (60a) comprises a second opening (62b), wherein the first opening (62a) is fluidly connected with the coolant inlet (40) and the second opening (62b) is fluidly connected with coolant outlet (50).

9. The water charge air cooler (1) according to claims 1-7, wherein the plate assembly (30) comprises a second side wall (60b), wherein the second side wall (60b) is opposite to the first side wall (60a).

10. The water charge air cooler (1) according to claim 9, wherein the first side wall (60a) is fluidly connected to coolant inlet (40) through the first opening (61a) and the second side wall (60b) is fluidly connected to the coolant outlet (60b) thorough the second opening (61b).

11. The water charge air cooler (1) according to any of the preceding claims, wherein at least a portion of the water box (70) is sloping towards the tubes (10) along their stacking direction.

12. The water charge air cooler (1) according to any of the preceding claims, wherein the water box (70) comprises at least two sections, wherein one section is sloping and the other section is flat.

13. The water charge air cooler (1) according to any of the preceding claims, wherein the water box (70) is an essentially L-shaped portion.

14. The water charge air cooler (1) according to any of the preceding claims, wherein the water box (70) is of material having the same properties as the plate assembly (30).

15. The water charge air cooler (1) according to any of the preceding claims, wherein the water box (70) is of material having different properties than the plate assembly (30).

## Patentansprüche

1. Wasserladeluftkühler (1), umfassend
- ein Bündel von länglichen Flachrohren (10) für eine Luft, befestigt auf beiden Seiten in einem Paar von Sammelrohren (20),
- Plattenanordnung (30), die gemeinsam mit den Sammelrohren (20) mindestens einen Teil der Rohre (10) einkapselt, um einen fluiddichten Kanal für ein Kühlmittel auszubilden,
- einen Kühlmitteleinlass (40) und einen Kühlmittelauslass (50), die mit der Plattenanordnung (30) verbunden sind,
wobei die Plattenanordnung (30) eine erste Seitenwand (60a) umfasst, wobei die erste Seitenwand (60a) eine den Rohren (10) zugewandte Innenoberfläche (61) aufweist,
- einen Wasserkasten (70) zur Verteilung des Kühlmittels auf die Rohre (10), wobei der Kühlmitteleinlass (40) am Wasserkasten (70) angebracht ist,
- wobei die erste Seitenwand (60a) eine erste Öffnung (62a) zur Fluidverbindung des Wasserkastens (70) mit den Rohren (10) umfasst, wobei der Wasserkasten (70) entlang des Umrisses der ersten Öffnung (62) an der Seitenwand (60a) angebracht ist,
**dadurch gekennzeichnet, dass**
der Wasserkasten (70) mit der Innenoberfläche (61) der ersten Seitenwand (60a) verbunden ist, während er durch die erste Öffnung (62) von der Seitenwand (60a) nach außen vorsteht.

2. Wasserladeluftkühler (1) nach Anspruch 1, wobei die erste Seitenwand (60a) einen Kragen (63) aufweist, der von den Rohren (10) weg vorsteht, sodass mindestens ein Abschnitt der Innenoberfläche (61) in Bezug auf die erste Seitenwand (60a) verschoben ist.

3. Wasserladeluftkühler (1) nach einem der vorhergehenden Ansprüche, wobei der Wasserkasten (70) einen Flansch (71) umfasst, der eine den Rohren (10) zugewandte Flanschinnenoberfläche (71b) und eine der Flanschinnenoberfläche (71b) gegenüberliegende Flanschaußenoberfläche (71a) umfasst.

4. Wasserladeluftkühler (1) nach Anspruch 3, wobei die Flanschinnenoberfläche (71b) in Kontakt mit mindestens einem der Rohre (10) steht, sodass die Rohre (10) den Wasserkasten (70) stützen.

5. Wasserladeluftkühler (1) nach Anspruch 3 oder 4, wobei die Flanschaußenoberfläche (71a) in Kontakt mit der Öffnungsinnenoberfläche (61) steht.

6. Wasserladeluftkühler (1) nach Anspruch 5, **dadurch gekennzeichnet, dass** der Flansch (71) gegen den Kragen (63) gedrückt wird.

7. Wasserladeluftkühler (1) nach einem der vorhergehenden Ansprüche, wobei sich die erste Öffnung (62a) entlang der Stapelrichtung der Rohre (10) erstreckt.

8. Wasserladeluftkühler (1) nach einem der vorhergehenden Ansprüche, wobei die erste Seitenwand (60a) eine zweite Öffnung (62b) umfasst, wobei die erste Öffnung (62a) in Fluidverbindung mit dem Kühlmitteleinlass (40) steht und die zweite Öffnung (62b) in Fluidverbindung mit dem Kühlmittelauslass (50) steht.

9. Wasserladeluftkühler (1) nach den Ansprüchen 1-7, wobei die Plattenanordnung (30) eine zweite Seitenwand (60b) umfasst, wobei die zweite Seitenwand (60b) der ersten Seitenwand (60a) gegenüberliegt.

10. Wasserladeluftkühler (1) nach Anspruch 9, wobei die erste Seitenwand (60a) durch die erste Öffnung (61a) in Fluidverbindung mit dem Kühlmitteleinlass (40) steht und die zweite Seitenwand (60b) durch die zweite Öffnung (61b) in Fluidverbindung mit dem Kühlmittelauslass (60b) steht.

11. Wasserladeluftkühler (1) nach einem der vorhergehenden Ansprüche, wobei mindestens ein Abschnitt des Wasserkastens (70) zu den Rohren (10) hin entlang ihrer Stapelrichtung geneigt ist.

12. Wasserladeluftkühler (1) nach einem der vorhergehenden Ansprüche, wobei der Wasserkasten (70) mindestens zwei Abschnitte umfasst, wobei ein Abschnitt geneigt und der andere Abschnitt flach ist.

13. Wasserladeluftkühler (1) nach einem der vorhergehenden Ansprüche, wobei der Wasserkasten (70) ein im Wesentlichen L-förmiger Abschnitt ist.

14. Wasserladeluftkühler (1) nach einem der vorhergehenden Ansprüche, wobei der Wasserkasten (70) aus einem Material besteht, das die gleichen Eigenschaften aufweist wie das der Plattenanordnung (30).

15. Wasserladeluftkühler (1) nach einem der vorhergehenden Ansprüche, wobei der Wasserkasten (70) aus einem Material besteht, das andere Eigenschaften aufweist als das der Plattenanordnung (30).

## Revendications

1. Refroidisseur d'air de suralimentation à eau (1), comprenant
- un faisceau de tubes plats allongés (10) pour un air, fixé sur les deux côtés en une paire de collecteurs (20) ,
- ensemble de plaques (30) enfermant, conjointement avec les collecteurs (20), au moins une partie des tubes (10) pour former un canal étanche aux fluides pour un liquide de refroidissement
- une entrée de liquide de refroidissement (40) et une sortie de liquide de refroidissement (50) raccordées à l'ensemble de plaques (30), dans lequel l'ensemble de plaques (30) comprend une première paroi latérale (60a), la première paroi latérale (60a) ayant une surface intérieure (61) faisant face aux tubes (10),
- une caisse à eau (70) pour distribution du liquide de refroidissement par rapport aux tubes (10), l'entrée de liquide de refroidissement (40) étant attachée à la caisse à eau (70),
- dans lequel la première paroi latérale (60a) comprend une première ouverture (62a) pour mettre en communication fluidique la caisse à eau (70) avec les tubes (10), dans lequel la caisse à eau (70) est attachée à la paroi latérale (60a) le long du contour de la première ouverture (62),
**caractérisé en ce que**
la caisse à eau (70) est raccordée à la surface intérieure (61) de la première paroi latérale (60a), alors qu'elle fait saillie vers l'extérieur à partir de la paroi latérale (60a) à travers la première ouverture (62).

2. Refroidisseur d'air de suralimentation à eau (1) selon la revendication 1, dans lequel la première paroi latérale (60a) comprend un collet (63), faisant saillie à l'opposé des tubes (10), pour qu'au moins une portion de la surface intérieure (61) soit décalée par rapport à la première paroi latérale (60a).

3. Refroidisseur d'air de suralimentation à eau (1) selon l'une quelconque des revendications précédentes, dans lequel la caisse à eau (70) comprend une bride (71) comprenant une surface intérieure de bride (71b) faisant face aux tubes (10) et une surface extérieure de bride (71a) en face de la surface intérieure de bride (71b).

4. Refroidisseur d'air de suralimentation à eau (1) selon la revendication 3, dans lequel la surface intérieure de bride (71b) est en contact avec au moins un des tubes (10), pour que les tubes (10) supportent la caisse à eau (70).

5. Refroidisseur d'air de suralimentation à eau (1) selon les revendications 3 ou 4, dans lequel la surface extérieure de bride (71a) est en contact avec la surface intérieure d'ouverture (61).

6. Refroidisseur d'air de suralimentation à eau (1) selon la revendication 5, dans lequel la bride (71) est poussée vers le collet (63).

7. Refroidisseur d'air de suralimentation à eau (1) selon l'une quelconque des revendications précédentes, dans lequel la première ouverture (62a) s'étend le long d'une direction d'empilage des tubes (10).

8. Refroidisseur d'air de suralimentation à eau (1) selon l'une quelconque des revendications précédentes, dans lequel la première paroi latérale (60a) comprend une seconde ouverture (62b), dans lequel la première ouverture (62a) est raccordée fluidiquement à l'entrée de liquide de refroidissement (40) et la seconde ouverture (62b) est raccordée fluidiquement à la sortie de liquide de refroidissement (50).

9. Refroidisseur d'air de suralimentation à eau (1) selon les revendications 1 à 7, dans lequel l'ensemble de plaques (30) comprend une seconde paroi latérale (60b), dans lequel la seconde paroi latérale (60b) est en face de la première paroi latérale (60a).

10. Refroidisseur d'air de suralimentation à eau (1) selon la revendication 9, dans lequel la première paroi latérale (60a) est fluidiquement raccordée à l'entrée de liquide de refroidissement (40) par l'intermédiaire de la première ouverture (61a) et la seconde paroi latérale (60b) est fluidiquement raccordée à la sortie de liquide de refroidissement (60b) par l'intermédiaire de la seconde ouverture (61b).

11. Refroidisseur d'air de suralimentation à eau (1) selon l'une quelconque des revendications précédentes, dans lequel au moins une portion de la caisse à eau (70) est en pente vers les tubes (10) le long de leur direction d'empilage.

12. Refroidisseur d'air de suralimentation à eau (1) selon l'une quelconque des revendications précédentes, dans lequel la caisse à eau (70) comprend au moins deux sections, dans lequel une section est en pente et l'autre section est plate.

13. Refroidisseur d'air de suralimentation à eau (1) selon l'une quelconque des revendications précédentes, dans lequel la caisse à eau (70) est une portion essentiellement en forme de L.

14. Refroidisseur d'air de suralimentation à eau (1) selon l'une quelconque des revendications précédentes, dans lequel la caisse à eau (70) est de matériau ayant les mêmes propriétés que l'ensemble de plaques (30).

15. Refroidisseur d'air de suralimentation à eau (1) selon l'une quelconque des revendications précédentes, dans lequel la caisse à eau (70) est de matériau ayant des propriétés différentes de celles de l'ensemble de plaques (30).
